# FASCICULE DE BREVET EUROPEEN

(11) **EP 1 234 749 B1**
(45) Date de publication et mention de la délivrance du brevet: **28.06.2006**
(21) Numéro de dépôt: 02290141.7
(22) Date de dépôt: 21.01.2002
(51) Int. Cl.: B62D 21/15

(54) **Structure pour véhicule automobile**
Kraftfahrzeugstruktur
Motor vehicle structure

(30) Priorité: 23.02.2001 FR 0102495
(43) Date de publication de la demande: 28.08.2002
(73) Titulaire: Peugeot Citroen Automobiles SA, 92200 Neuilly sur Seine (FR)
(72) Inventeur: Cazes, Christophe, 75009 Paris (FR)
(74) Mandataire: Robert, Jean-François

(56) Documents cités:
- DE-A- 3 040 518
- DE-A- 19 926 605
- DE-U- 29 704 093
- US-B1- 6 276 484
- PATENT ABSTRACTS OF JAPAN vol. 018, no. 083 (M-1558), 10 février 1994 (1994-02-10) & JP 05 294257 A (MAZDA MOTOR CORP), 9 novembre 1993 (1993-11-09)

## Description

L'invention se rapporte à une structure pour véhicule automobile en général et à une traverse d'auvent d'une telle structure en particulier.

L'habitacle d'un véhicule automobile est délimité par six points. Devant le conducteur et le passager avant, à gauche et à droite, est disposée une pièce dite pied avant. Entre ces deux premières personnes et les passagers arrières se trouve, de chaque côté également, un pied milieu. Enfin, les deux derniers points se situent, toujours de chaque côté, entre les passagers arrières et le coffre.

II est connu pour limiter la violence d'un choc frontal lors d'un accident de solidariser aux deux pieds avants une pièce allongée, galbée (la partie bondée vers l'avant du véhicule) et faisant toute la largeur du véhicule appelée traverse d'auvent. Mais aussi, des longerons le long des ailes avants comportant des nervures permettant de programmer les parties que l'on veut plier prioritairement lors de ce même choc. Ainsi, lors d'un choc frontal, le groupe motopropulseur (moteur, boite de vitesse, circuit de refroidissement, etc..), qui est poussé vers l'habitacle, va se heurter à ladite traverse d'auvent, laquelle grâce à son galbe et à son ancrage sur les deux pieds avants va exercer une retenue contre l'intrusion dans l'habitacle.

Voir, à ce sujet, l'exposé du document DE-A-19925505 qui est en ligne avec le préambule de la revendication 1.

Malheureusement, cette structure selon l'art antérieur a pour inconvénient lors de choc frontal violent de ne pas résister à la puissante contrainte exercée par le recul du groupe motopropulseur. La traverse d'auvent joue alors le rôle de véritable catapulte. En effet par le pivotement des pieds avants, le dégalbage de ladite traverse va accentuer la force d'intrusion dans l'habitacle et déformer en même temps toute la structure entre l'avant du véhicule et le pied milieu.

Le but de la présente invention est de pallier tout ou partie des inconvénients de l'art antérieur précédemment cité en proposant une structure pour véhicule automobile répondant aux réglementations en matière de crash test par choc frontal, minimisant les intrusions dans l'habitacle et évitant les déformations latérales entre les pieds avants et les pieds milieux.

A cet effet, l'invention propose une structure pour véhicule automobile comprenant des moyens de compensation contre les chocs lors d'accident, au moins deux longerons à déformation programmée de chaque côté de la partie avant dudit véhicule, au moins un pied avant et un pied milieu de chaque côté sensiblement dans la même partie avant, lesquels deux derniers délimitent l'espace vital des personnes à l'avant du véhicule, un groupe motopropulseur caractérisée en ce que les moyens de compensation comportent une traverse d'auvent solidarisée sensiblement perpendiculairement entre deux desdits longerons.

Cette structure selon l'invention permet donc avantageusement d'éviter ledit effet catapulte de l'art antérieur et propose une déformation qui supprime quasiment le pivotement des pieds avants responsables des déformations entre lesdits pieds avants et les pieds milieux dudit véhicule.

De manière avantageuse, ladite traverse d'auvent est sensiblement en forme d'arc de cercle bombé vers l'avant du véhicule, sa section présentant un creux apte à freiner notamment l'avancée du groupe motopropulseur. La traverse permet ainsi d'offrir un premier moyen de compensation du choc.

En outre, avantageusement, lesdits moyens de compensation, selon l'invention, intègrent également les pieds avants, lesquels sont solidarisés chacun à un desdits longerons et se situant entre la traverse d'auvent et l'habitacle, chaque pied avant lors du choc servant de butée à une des extrémités de ladite traverse d'auvent lors du recul notamment du groupe motopropulseur permettant un dégalbage de ladite traverse en limitant les intrusions dans ledit espace vital. Cette disposition de la structure selon l'invention permet d'offrir un deuxième moyen de compensation du choc.

Enfin selon l'invention, lesdits longerons ont des sections, comportant des nervures jusqu'à la base du pied avant, agencées de sorte que la contrainte nécessaire pour déformer la partie avant du véhicule vers ledit espace vital augmente au fur et à mesure de l'écrasement permettant ainsi de programmer une synergie de déformation du longeron et de la traverse lors d'un choc frontal.

La structure permet donc une déformation programmée de la partie avant du véhicule dont la ligne de progression sera sensiblement parallèle à la largeur dudit véhicule.

D'autres particularités et avantages apparaîtront à la lecture de la description ci-après faite en référence aux figures dans lesquelles :
- la figure 1 est une vue de dessus schématique d'une structure selon l'art antérieur ;
- la figure 2 est une vue de dessus schématique d'une structure selon l'art antérieur après un choc frontal ;
- la figure 3 est une vue de dessus schématique d'une structure selon l'invention ;
- la figure 4 est une vue de dessus schématique d'une structure selon l'invention après un choc frontal.

Dans les explications qui suivront, on pourra noter que la structure selon l'invention permet de réaliser des traverses d'auvent très avancées. Cela permet de pouvoir l'adapter sur des berlines mais aussi sur des véhicules dits monocorps comme les monospaces qui ont la particularité d'avoir des pare-brises qui finissent sensiblement à la verticale des roues avants.

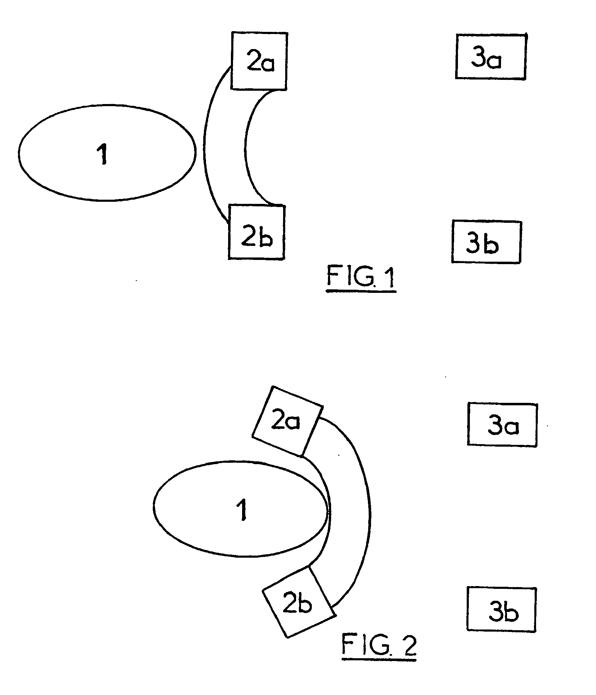

Aux figures 1 et 2, on peut voir la structure telle que décrite dans l'art antérieur. Ainsi on retrouve schématisé le groupe motopropulseur (1) qui regroupe tout le compartiment moteur comprenant ledit moteur, la boite de vitesse, le circuit de refroidissement, etc.. Egalement sont schématisés les deux pieds avants (2a, 2b), les deux pieds milieux (3a, 3b) et la traverse d'auvent (4). On remarquera que ladite traverse est galbée, le bombage étant orienté vers l'avant du véhicule, et solidarisée aux deux pieds avants (2a, 2b). Enfin, l'avant de l'habitacle (5) est délimité par les deux pieds avants (2a, 2b) et les deux pieds milieux (3a, 3b).

Lors d'un choc frontal violent, la contrainte exercée par le recul du groupe motopropulseur (1) est telle qu'elle est supérieure à celle de l'addition du dégalbage de la traverse (4) et de la rotation des deux pieds avants (2a, 2b). Il en résulte une cession brutale de la traverse (4) et une intrusion très rapide dans l'habitacle (5) réduisant sensiblement le volume de celui-ci. Ladite cession de la traverse (4) contraignant les deux pieds avants (2a, 2b) à une rotation autour de leur axe vertical respectif, déformant du même coup les deux côtés de caisse de l'avant du véhicule.

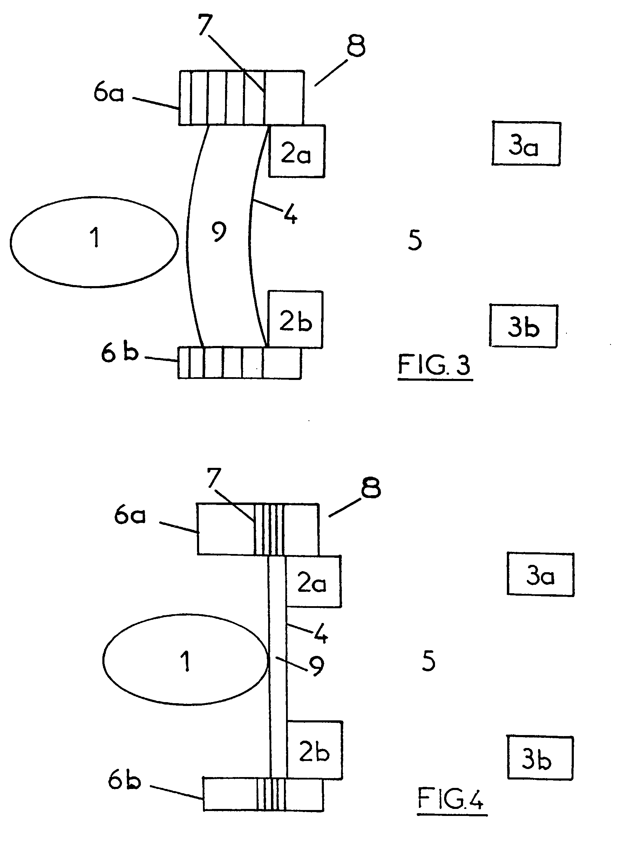

Aux figures 3 et 4 est schématisée la structure telle selon l'invention. On trouve de la même manière que dans les figures précédentes, le groupe motopropulseur (1), la traverse galbée (4), les deux pieds avants (2a, 2b,), les deux pieds milieux (3a, 3b) et l'avant de l'habitacle (5) délimité par lesdits quatre pieds (2a, 2b, 3a, 3b). La traverse (4) étant cette fois-ci solidarisée à deux longerons (6a, 6b), ces deux derniers étant eux même solidarisés chacun à un des deux pieds avants.

Lors d'un choc frontal violent, dans un premier temps, l'obstacle occasionnant ledit choc va appuyer sur les longerons (6a, 6b). Les nervures (7) qu'ils comportent vont permettre une première phase de déformation contrôlée privilégiant l'écrasement la partie avant par rapport à la partie arrière du capot (non représenté).

Dans un deuxième temps, le groupe motopropulseur (1) va être poussé vers la traverse (4). Le diamètre de ladite section va alors décroître au fur et mesure du recul dudit groupe (1) en prenant comme butée les deux pieds avants (2a, 2b). La deuxième phase de déformation contrôlée est donc réalisée d'une part, grâce aux deux longerons (6a, 6b) dont les nervures (7) s'étalent jusqu'aux pieds avants (2a, 2b) et d'autre part, grâce à la contraction du creux (9) situé dans la section de ladite traverse (4).

Dans un troisième temps, ladite contraction de la traverse (4) étant maximale, le recul du groupe motopropulseur (1) va devoir fournir une contrainte suffisante à dégalber la traverse d'auvent (4). La troisième phase de déformation contrôlée est donc réalisée grâce aux nervures (7) des deux longerons (6a, 6b) et au dégalbage de la traverse d'auvent (4). Quasi instantanément, l'inertie dudit dégalbage va être freinée. En effet, la traverse (4) étant en butée contre les pieds avants (2a, 2b), ladite traverse va se contenter d'adopter une longueur sensiblement parallèle à la largeur du véhicule et non plus galbée. Les longerons ne possédant plus de nervures (7) non utilisées à ce stade de l'écrasement du véhicule, la quatrième phase de déformation contrôlée est donc opérée grâce au galbe initial de la traverse d'auvent (4) et aux deux pieds avants (2a, 2b) du véhicule. Ainsi à ce stade de l'écrasement, l'intégrité de l'habitacle (5) et des côtés de caisse entre les pieds avants (2a, 2b) et les pieds milieux (3a, 3b) sont chacune conservée.

Si le choc est vraiment très violent, on assiste alors en plus à une cinquième déformation qui va porter atteinte à l'intégrité de l'habitacle. Néanmoins avantageusement, la structure grâce à l'invention va permettre de contrôler un avancement progressif de la traverse d'avent (4) dans l'habitacle (5) et quasi parallèle à la largeur du véhicule automobile. En effet, le recul du groupe motopropulseur va être freiné par les deux longerons (6a, 6b) et les pieds avants (2a, 2b) permettant une répartition symétrique de la contrainte dudit recul en un avancement à l'intérieur de l'habitacle (5) tout en laissant les côtés de caisse entre les pieds avants (2a, 2b) et les pieds milieux (3a, 3b) quasiment indéformés.

L'invention permet donc de disposer d'une structure à cinq phases progressives de déformations contrôlées, les dernières nécessitant beaucoup plus d'énergie pour être mises en oeuvre que les premières. Ladite structure permet donc de pouvoir répondre aux réglementations les plus sévères en matière de crash test par choc frontal, mais aussi de contenir les intrusions dans l'habitacle et de conserver la quasi intégrité des côtés de caisse permettant l'ouverture des portes du véhicule automobile.

## Revendications

1. Structure pour véhicule automobile comprenant des moyens de compensation (8) contre les chocs provoqués lors d'accident, au moins deux longerons (6a, 6b) à déformation programmée en partie avant dudit véhicule, au moins un pied avant (2a) et un pied milieu (3a) de chaque côté sensiblement dans la même partie avant délimitant l'espace vital (5) des personnes à l'avant du véhicule, un groupe motopropulseur (1), les moyens de compensation (8) comportant une traverse d'auvent (4) solidarisée sensiblement perpendiculairement entre deux desdits longerons **caractérisé en ce que** lesdits moyens de compensation intègrent également les pieds avant (2a, 2b), ces premiers étant solidarisés chacun à un desdits longerons et se situant entre la traverse d'auvent (4) et l'espace vital (5).

2. Structure selon la revendication 1, **caractérisée en ce que** ladite traverse d'auvent est sensiblement en forme d'arc de cercle bombé vers l'avant du véhicule, sa section présentant un creux (9) apte à freiner notamment l'avancée du groupe motopropulseur.

3. Structure selon la revendication 1 ou 2, **caractérisée en ce que** chaque pied avant (2a, 2b) sert de butée à une des extrémités de ladite traverse d'auvent lors de la poussée notamment du groupe motopropulseur (1) en cas de choc permettant un dégalbage de ladite traverse en limitant les intrusions dans ledit espace vital.

4. Structure selon l'une des revendications précédentes, **caractérisée en ce que** lesdits longerons ont des sections, comportant des nervures (7) jusqu'à la base des pied avant (2a,2b), agencées de sorte que la contrainte nécessaire pour enfoncer la partie avant du véhicule vers ledit espace vital augmente au fur et à mesure de l'écrasement du premier vers le deuxième permettant ainsi de programmer une synergie de déformation des longerons (6a, 6b) et de la traverse d'auvent (4) lors d'un choc frontal.

## Claims

1. Structure for motor vehicle comprising means (8) for compensating against impact caused at the time of an accident, at least two longitudinal members (6a, 6b) with programmed deformation at the front of said vehicle, at least one front pillar (2a) and a centre pillar (3a) on each side substantially in the same front part delimiting the living space (5) for people in the front of the vehicle, a drive train (1), the compensation means (8) comprising a cowl cross-member (4) made integral substantially perpendicularly between two of said longitudinal members **characterised in that** said compensation means also incorporate the front pillars (2a, 2b), the former each being made integral with one of said longitudinal members and being located between the cowl cross-member (4) and the living space (5).

2. Structure according to Claim 1, **characterised in that** said cowl cross-member is substantially in the shape of an arc of a circle curved towards the front of the vehicle, its section having a hollow (9) capable of slowing down in particular the lead of the drive train.

3. Structure according to Claim 1 or 2, **characterised in that** each front pillar (2a, 2b) is used as a stop for one of the ends of said cowl cross-member when there is a driving force in particular from the drive train (1) in the event of impact allowing an uncurving of said cross-member while limiting intrusion into said living space.

4. Structure according to one of the preceding claims, **characterised in that** said longitudinal members have sections, comprising ribs (7) as far as the base of the front pillars (2a, 2b), arranged so that the force necessary to drive the front part of the vehicle into said living space increases little by little as the first one is crushed against the second one, thus making it possible to program synergy of deformation of the longitudinal members (6a, 6b) and the cowl cross-member (4) at the time of a front impact.

## Patentansprüche

1. Aufbau für ein Kraftfahrzeug mit Mitteln (8) zum Kompensieren von Stößen, die durch einen Unfall verursacht werden, mindestens zwei Längsträgern (6a, 6b) mit programmierter Deformation im vorderen Abschnitt des Fahrzeugs, mindestens einer vorderen Säule (2a) und einer mittleren Säule (3a) auf jeder Seite im Wesentlichen im gleichen vorderen Abschnitt, die den Raum (5) der vorderen Insassen des Fahrzeugs festlegen, und mit einem Triebwerk (1), wobei die Kompensationsmittel (8) ein Windlaufquerteil (4) aufweisen, das im Wesentlichen senkrecht zwischen zwei Längsträgern befestigt ist, **dadurch gekennzeichnet, dass** zu den Kompensationsmitteln auch die vorderen Säulen (2a, 2b) gehören, die jeweils mit einem der Längsträger fest verbunden sind und sich zwischen dem Windlaufquerteil (4) und dem Fahrgastraum (5) befinden.

2. Aufbau nach Anspruch 1, **dadurch gekennzeichnet, dass** das Windlaufquerteil im Wesentlichen die Form eines Kreisbogens besitzt, der sich zur Vorderseite des Fahrzeugs wölbt, und im Querschnitt einen Hohlraum (9) aufweist, der insbesondere das Vorrücken des Triebwerks bremsen kann.

3. Aufbau nach Anspruch 1 oder 2, **dadurch gekennzeichnet, dass** beim Schub insbesondere des Triebwerks (1) im Falle eines Stoßes jede vordere Säule (2a, 2b) als Anschlag für eines der Enden des Windlaufquerteils dient, was ein Entwölben des Querteils ermöglicht und die Intrusionen in den Fahrgastraum begrenzt.

4. Aufbau nach einem der vorhergehenden Ansprüche, **dadurch gekennzeichnet, dass** die Längsträger Abschnitte mit Rippen (7) bis zur Basis der vorderen Säulen (2a, 2b) aufweisen, die so angeordnet sind, dass die Belastung, die nötig ist, um den vorderen Abschnitt des Fahrzeugs zum Fahrgastraum einzudrücken, mit dem Stauchen des ersten zum zweiten zunimmt, was es erlaubt, eine Synergie der Deformation der Längsträger (6a, 6b) und des Windlaufquerteils (4) bei einem Frontalzusammenstoß zu programmieren.
